(19) Europäisches Patentamt / European Patent Office / Office européen des brevets

(11) **EP 2 848 788 B1**

(12) **FASCICULE DE BREVET EUROPEEN**

(45) Date de publication et mention
de la délivrance du brevet:
**20.01.2016 Bulletin 2016/03**

(51) Int Cl.:
*F01P 7/16* *(2006.01)*          *G05D 23/19* *(2006.01)*

(21) Numéro de dépôt: **14183657.7**

(22) Date de dépôt: **05.09.2014**

(54) **Procédé de régulation de temperature de liquide de refroidissement pour véhicule automobile**

Kühlmittelstemperatursteuerung von einem Fahrzeug

Coolant temperature control method of a vehicle

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.09.2013 FR 1358769**

(43) Date de publication de la demande:
**18.03.2015 Bulletin 2015/12**

(73) Titulaire: **PEUGEOT CITROËN AUTOMOBILES SA
78140 Vélizy-Villacoublay (FR)**

(72) Inventeur: **Coffy, Christophe
95130 Le Plessis Bouchard (FR)**

(56) Documents cités:
**EP-A2- 0 889 211       US-A1- 2004 041 035
US-A1- 2005 006 487**

**Description**

L'invention a trait à l'automobile et plus particulièrement aux systèmes de refroidissement des moteurs à combustion interne.

Le système de refroidissement des moteurs à combustion interne constitue un organe primordial des voitures tant particulières qu'utilitaires.

Son rôle est d'évacuer la chaleur superflue du moteur et d'éviter une déformation trop importante de ses éléments. Cet objectif est atteint en faisant circuler un liquide de refroidissement composé d'eau et d'antigel, dans le circuit de refroidissement.

Ainsi le circuit de refroidissement comprend, de manière simplifiée, un radiateur, un vase d'expansion, un ventilateur et une pompe de circulation. Sur les moteurs suralimentés, le système de refroidissement du moteur permet également de refroidir le turbocompresseur.

Le radiateur dissipe dans l'air ambiant la chaleur excédentaire du moteur. La grande majorité des radiateurs sont réalisés en aluminium et sont composés de deux réservoirs reliés par un faisceau de tubes.

Le ventilateur permet une ventilation forcée du radiateur lorsque les conditions ne permettent pas à ce dernier de s'auto-ventiler. Une fois la température de consigne du liquide de refroidissement atteinte, le ventilateur est automatiquement actionné et de l'air passe de manière forcée à travers les ailettes du radiateur.

Le vase d'expansion permet de compenser la dilatation du liquide de refroidissement en fonction de la température. Il sert également à remplir le circuit de refroidissement.

Un moteur automobile fonctionne dans des conditions climatiques et à des charges variables. La nécessité de maintenir le liquide de refroidissement à une température de consigne nécessite la mise en oeuvre d'une régulation.

Le brevet français FR 2 859 757 ROBERT BOSCH GMBH décrit une régulation séparée du liquide de refroidissement dans le bloc moteur d'une part et dans la culasse d'autre part.

La puissance échangée dans le radiateur dépend de la température extérieure, de la vitesse du véhicule, du régime moteur, du couple et de l'activation du groupe moto ventilateur qui influent directement sur la température du liquide de refroidissement du moteur. Un problème récurrent dans les systèmes de refroidissement réside dans la stabilité et la réactivité de la régulation. En particulier, en condition chaude, le système de régulation doit pouvoir réagir rapidement afin de refroidir correctement le moteur. Inversement, en condition froide, la régulation peut être instable et engendrer de fortes baisses de température du liquide de refroidissement.

Ces problèmes de régulation impactent la température de l'habitacle lorsque le chauffage est en marche ainsi que les réglages moteurs qui varient fortement avec la température du liquide de refroidissement.

Ces problèmes de régulation apparaissent en particulier lorsque les stratégies de commande sont basées sur l'utilisation de régulateur PI (Proportionnel-Intégral). L'action proportionnelle du régulateur permet d'assurer une bonne dynamique, mais elle ne permet pas d'atteindre précisément la valeur cible, une augmentation du poids de l'action intégrale conduisant à un risque d'instabilité de la régulation. Il s'avère difficile de trouver un niveau d'action intégrale qui satisfasse aux différentes conditions d'état du véhicule automobile.

L'utilisation d'une commande par régulateur PID avec action intégrale nulle permet des dynamiques rapides, mais la valeur cible n'est pas atteinte précisément.

L'utilisation d'une commande par régulateur PID avec une action intégrale non nulle permet d'atteindre la valeur de consigne avec précision, mais avec des dépassements ou des dynamiques lentes pour certaines situations de vie du véhicule.

Il convient donc de résoudre ces problèmes et de proposer un procédé permettant de réguler simplement et efficacement la température du fluide de refroidissement d'un moteur de véhicule.

Un premier objet est de proposer un procédé de régulation de la température du fluide de refroidissement d'un moteur de véhicule par contrôle de la perte de charge sur la voie radiateur, avec une dynamique satisfaisante dans toutes les situations de vie du véhicule.

Un deuxième objet est de proposer un procédé de régulation de la température du fluide de refroidissement d'un moteur de véhicule à l'aide d'un régulateur PI.

A cet effet il est proposé en premier lieu un procédé de régulation d'un système de refroidissement équipé d'un obturateur de régulation du débit de fluide de refroidissement, comprenant les étapes suivantes :

- mesure de paramètres réels de la régulation thermique (notamment écart statique et temps de réponse),
- comparaison des paramètres réels avec des paramètres théoriques,

dans lequel,

- si un écart entre les paramètres réels et les paramètres théoriques est constaté, une opération consiste alors à modifier la position de l'obturateur suivant une fonction polynomiale du second degré où le débit volumique est proportionnel au carré de la position de l'obturateur.

Diverses caractéristiques supplémentaires peuvent être prévues, seules ou en combinaison :

- il est prévu une première étape consistant à mesurer le temps de réponse en fonction du débit du fluide de refroidissement ;
- l'écart entre les paramètres réels et les paramètres théoriques est compensé par la somme d'un terme proportionnel et d'un terme intégral ;
- la borne supérieure du terme intégral est égale à la différence entre l'ouverture maximale de l'obturateur et le terme proportionnel à la consigne de température de fluide de refroidissement ;
- la borne inférieure du terme intégral est égale au terme proportionnel avec un signe négatif à la consigne de température de fluide de refroidissement ;
- au-delà d'une température de fluide de refroidissement jugée élevée, le terme proportionnel est égal à l'ouverture maximale de l'obturateur auquel est ajoutée la valeur absolue de la borne inférieure du terme intégral ;
- en dessous d'une température de fluide de refroidissement jugée basse, le terme proportionnel est égal à la fermeture maximale de l'obturateur auquel est soustraite la borne supérieure du terme intégral.

Il est proposé en second lieu un véhicule automobile comprenant un moteur à combustion interne équipé d'un circuit de refroidissement régit par le procédé de régulation thermique précédemment cité.

D'autres objets et avantages de l'invention apparaîtront à la lumière de la description d'un mode de réalisation, faite ci-après en référence aux dessins annexés dans lesquels :

- la figure 1 est une représentation schématique d'un circuit de refroidissement ;
- la figure 2 est un diagramme représentant un procédé de refroidissement;
- la figure 3 est un graphe illustrant le déplacement d'un obturateur selon une fonction linéaire ;
- la figure 4 est un graphe illustrant le déplacement d'un obturateur selon une fonction polynomiale du second degré.

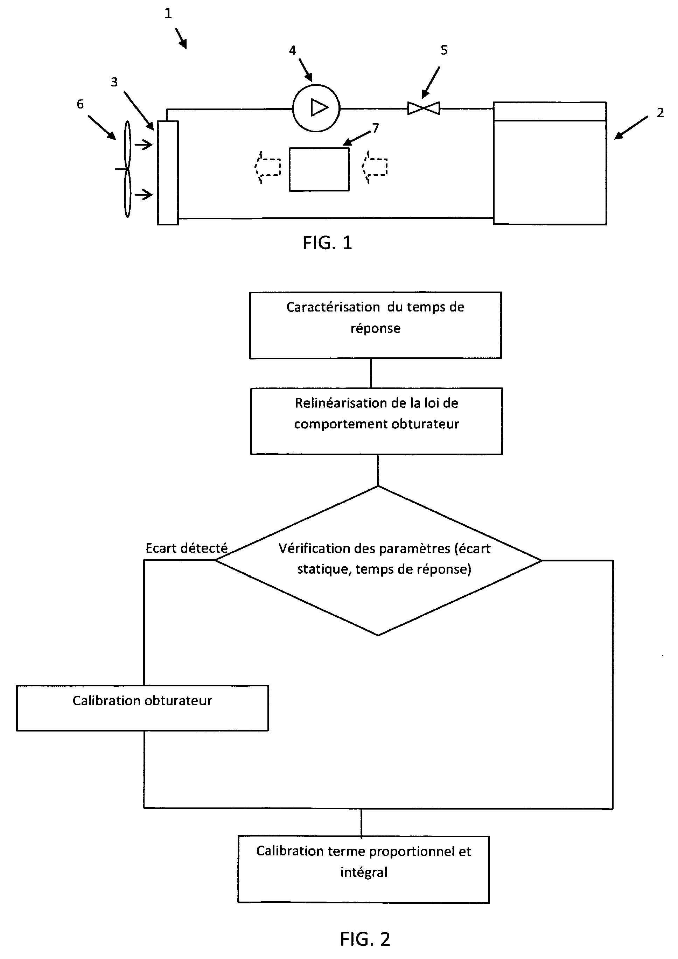

Sur la figure 1 est représenté un schéma de principe d'un circuit 1 de refroidissement. Ce circuit 1 de refroidissement comprend notamment un bloc 2 moteur à refroidir, un radiateur 3, une pompe 4 de circulation, un obturateur 5, un ventilateur 6 et un calculateur 7. Le calculateur 7 permet de déterminer la perte de charge dans le circuit 1 de refroidissement.

Le liquide de refroidissement à haute température quitte le bloc moteur 2 et se dirige ensuite vers le radiateur 3 pour y évacuer sa chaleur. En sortie du radiateur 3, le liquide de refroidissement rejoint le bloc moteur 2. Une pompe 4 de circulation permet au liquide de refroidissement de circuler et l'obturateur 5 mobile permet de contrôler la perte de charge dans le circuit 1 et ainsi de modifier le débit du fluide de refroidissement.

La régulation du système de refroidissement permet de maintenir substantiellement constante la température du bloc moteur 2. Il a été constaté qu'en condition chaude, il est judicieux de pouvoir avoir une plus grande réactivité afin de réguler plus rapidement la température du liquide de refroidissement. Cette réactivité peut être obtenue par exemple en adaptant la vitesse de déplacement de l'obturateur.

La figure 2 présente un diagramme illustrant un procédé de régulation d'un système de refroidissement. Ce procédé consiste en une première étape de caractérisation du temps de réponse, une deuxième étape dite de relinéarisation, une troisième étape de test, une quatrième étape de calibration si le test est validé, et une cinquième étape de calibration du terme proportionnel et intégral.

La première étape consiste à mesurer le temps de réponse en fonction du débit du fluide de refroidissement, en vue d'obtenir des bornes qui seront utilisées ultérieurement dans le procédé.

La mesure du temps de réponse est opérée dans des conditions initiales prédéterminées. Dans un mode de réalisation, ces conditions sont les suivantes : moteur chaud, obturateur fermé (voie radiateur fermée), groupe moto ventilateur à vitesse maximale, moteur au ralenti accéléré au régime y. En boucle ouverte, une ouverture de x% est demandée et le temps nécessaire pour obtenir une diminution de 1°C de la température du fluide de refroidissement est mesuré. A ce régime y et cette ouverture de x% correspond un débit de fluide de refroidissement donné.

La mesure du temps de réponse est répétée successivement à différentes ouvertures de l'obturateur et à différents régimes moteur y, de sorte à obtenir le temps de réponse en fonction du débit du fluide de refroidissement. Le temps de réponse est caractérisé par le :

- temps mis par l'actionneur pour atteindre sa position finale,
- temps que met le débit de fluide de refroidissement pour devenir constant,
- temps de réponse du capteur de mesure de la température de fluide de refroidissement dans le circuit.

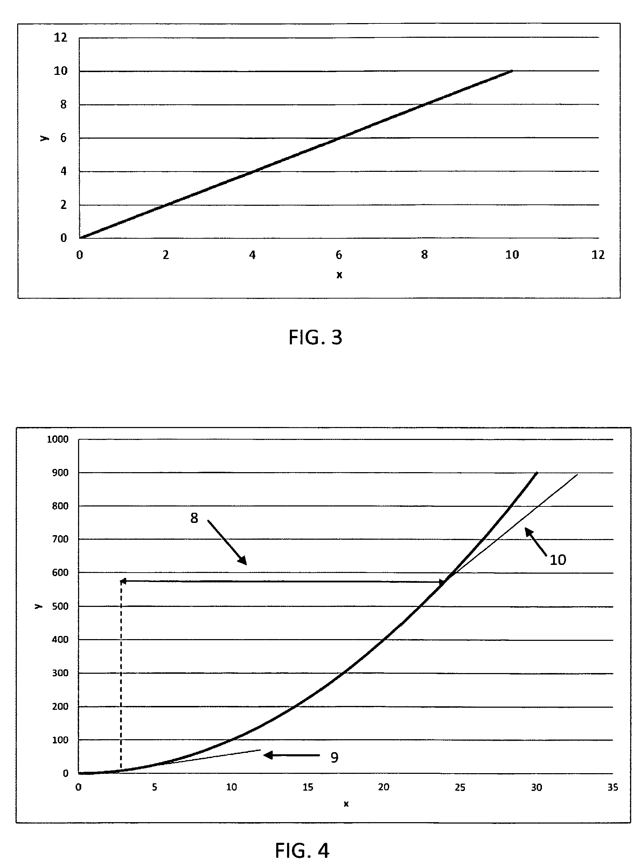

La deuxième étape du procédé de régulation, dite de relinéarisation, consiste à modifier le signal brut obtenu du capteur de mesure du débit de liquide de refroidissement en fonction de la position de l'obturateur. Le signal brut est représenté sur la figure 3 et obéit à une fonction du type affine. L'axe des abscisses et des ordonnés correspondent respectivement à la position de l'obturateur et au débit volumique de fluide de refroidissement. Le coefficient directeur correspond à la vitesse de déplacement de l'obturateur. En l'occurrence, l'obturateur a une vitesse de déplacement constante quelles que soient les conditions d'utilisation du véhicule.

La relinéarisation permet d'adapter la vitesse de déplacement de l'obturateur aux conditions d'utilisation du véhicule.

Il s'agit ici d'associer le débit du fluide de refroidissement Y au carré de l'ouverture X de l'obturateur. La figure 4 illustre une loi de comportement de l'obturateur. L'intervalle pointé par la double flèche 8 représente la zone de déplacement de l'obturateur. Plus la position de l'obturateur tend vers l'infini, plus le coefficient directeur des tangentes en chaque point de la courbe tend vers l'infini. Autrement dit, la vitesse de déplacement de l'obturateur augmente en fonction de sa position.

Les positions limites de l'obturateur sont déterminées sur la figure 4 grâce aux tangentes 9,10 mesurées dans la première étape et dont les coefficients directeur répondent à la règle suivante :

$$\frac{coef\ directeur\ grandes\ ouvertures}{coef\ directeur\ petites\ ouvertures} = \frac{temps\ de\ réponse\ petites\ ouvertures}{temps\ de\ réponse\ grandes\ ouvertures}$$

La relinéarisation permet d'obtenir une meilleure réactivité lorsque les conditions d'utilisation du moteur sont chaudes (grandes ouvertures de l'obturateur 5). A l'inverse, la réactivité est moins importante en condition froide d'utilisation.

La relinéarisation peut avoir un effet perturbateur sur la position de l'obturateur 5. Le fait de modifier le signal brut afin que la position de l'obturateur 5 varie selon une fonction mathématique implique parfois que le temps de réponse dépasse l'intervalle de tolérance prévu, et de même pour l'écart statique.

La troisième étape du procédé consiste en une opération de vérification de la régulation. Dans un mode de réalisation, la vérification se fait sur la base des paramètres suivants :

- temps de réponse
- écart statique.

La vérification peut toutefois ne pas seulement se limiter à ces paramètres.

L'écart statique correspond à l'écart entre la consigne de position de l'obturateur 5 et la position que voit le capteur après un temps infini. Si le temps de réponse ou bien l'écart statique dépasse d'un intervalle de tolérance accordé, une opération de calibration est prévue.

La quatrième étape consiste à calibrer l'obturateur afin de repositionner l'obturateur dans l'intervalle de tolérance accordé selon la fonction polynomiale définie.

La cinquième et dernière étape permet de calibrer le terme proportionnel et intégral dans un régulateur proportionnel intégral. L'écart entre la consigne de température et la température du fluide de refroidissement mesurée est rendu nul en sommant le terme proportionnel et le terme intégral. Dans un régulateur de l'état de la technique, le terme intégral permet un ajustement fin tandis que le terme proportionnel comble la majeure partie de l'écart mesuré. Plus particulièrement, la part intégrale reprend historiquement les écarts « fins » mesurés, et les ajoute progressivement de sorte à atteindre la température de consigne du fluide de refroidissement.

Afin de limiter le temps d'adaptation de la régulation, le terme intégral est borné. La borne inférieure du terme intégral est égale au terme proportionnel à la consigne de la température de fluide de refroidissement, avec un signe négatif. La borne supérieure du terme intégral est égale à la différence entre l'ouverture maximale de l'obturateur et le terme proportionnel à la consigne de température de fluide de refroidissement.

Ainsi, et contrairement à un régulateur proportionnel intégral conventionnel, c'est le terme intégral qui comble l'écart mesuré en se basant sur l'historique des mesures.

Avantageusement il est prévu certaines mesures d'urgence, notamment lorsque la température d'eau s'élève ou diminue brusquement.

Ainsi les adaptations suivantes peuvent être faites en complément.

Au-delà d'une température de fluide de refroidissement jugée élevée, le terme proportionnel est égal à l'ouverture maximale, auquel est ajoutée la valeur absolue de la borne inférieure du terme intégral. Autrement dit, le terme proportionnel permet d'ouvrir totalement l'obturateur, pour éviter d'endommager le moteur.

En dessous d'une température de fluide de refroidissement jugée basse, le terme proportionnel est égal à la fermeture maximale auquel est soustraite la borne supérieure du terme intégral. Le terme proportionnel permet de fermer totalement l'obturateur.

Pour éviter les chutes brutales de température du fluide de refroidissement lors d'un changement de consigne, le terme proportionnel est avantageusement identique quel que soit la consigne de température de fluide de refroidissement.

Un premier avantage est d'obtenir un obturateur dont la vitesse de déplacement est optimisée, en fonction du débit de fluide de refroidissement.

Un deuxième avantage réside dans le fait que les chutes brutales de températures sont évitées.

Un troisième avantage est que la température habitacle ne varie pas brutalement, ce qui assure un meilleur confort aux passagers.

## Revendications

1. Procédé de régulation d'un système de refroidissement équipé d'un obturateur (5) de régulation du débit de fluide de refroidissement, comprenant les étapes suivantes :

   - mesure de paramètres réels de la régulation thermique, comprenant notamment un écart statique et un temps de réponse,
   - comparaison des paramètres réels avec des paramètres théoriques,

   **caractérisé en ce que**,

   - si un écart entre les paramètres réels et les paramètres théoriques est constaté, une opération consiste alors à modifier la position de l'obturateur (5) suivant une fonction polynomiale du second degré où le débit volumique est proportionnel au carré de la position de l'obturateur (5).

2. Procédé selon la revendication 1, **caractérisé en ce qu'**une première étape consiste à mesurer le temps de réponse en fonction du débit du fluide de refroidissement.

3. Procédé selon la revendication 1 ou la revendication 2, **caractérisé en ce que** l'écart entre les paramètres réels et les paramètres théoriques est compensé par la somme d'un terme proportionnel et d'un terme intégral.

4. Procédé selon la revendication 3, **caractérisé en ce que** la borne supérieure du terme intégral est égale à la différence entre l'ouverture maximale de l'obturateur et le terme proportionnel à la consigne de température de fluide de refroidissement.

5. Procédé selon la revendication 3, **caractérisé en ce que** la borne inférieure du terme intégral est égale au terme proportionnel avec un signe négatif à la consigne de température de fluide de refroidissement.

6. Procédé selon l'une des revendications 3 à 5, **caractérisé en ce qu'**au-delà d'une température jugée élevée, le terme proportionnel est égal à l'ouverture maximale de l'obturateur auquel est ajoutée la valeur absolue de la borne inférieure du terme intégral.

7. Procédé selon l'une des revendications 3 à 5, **caractérisé en ce qu'**en dessous d'une température de fluide de refroidissement jugée basse, le terme proportionnel est égal à la fermeture maximale de l'obturateur auquel est soustraite la borne supérieure du terme intégral.

8. Véhicule automobile comprenant un moteur à combustion interne équipé d'un circuit de refroidissement régit par le procédé de régulation thermique selon l'une quelconque des revendications précédentes.

## Patentansprüche

1. Regulierungsverfahren eines Kühlsystems, das mit einem Verschlusselement (5) zur Regulierung der Durchflussmenge an Kühlfluid ausgestattet ist, umfassend die folgenden Schritte:

   - Messen von tatsächlichen Parametern der Wärmeregulierung, umfassend insbesondere eine statische Abweichung und eine Antwortzeit,

- Vergleichen der tatsächlichen Parameter mit theoretischen Parametern,

**dadurch gekennzeichnet, dass**

- wenn eine Abweichung zwischen den tatsächlichen Parametern und den theoretischen Parametern festgestellt wurde, besteht nun ein Vorgang darin, die Position des Verschlusselements (5) nach einer polynomialen Funktion zweiten Grades zu verändern, bei der die Volumenmenge zum Quadrat der Position des Verschlusselements (5) proportional ist.

**2.** Verfahren nach Anspruch 1, **dadurch gekennzeichnet, dass** ein erster Schritt darin besteht, die Antwortzeit in Abhängigkeit von der Durchflussmenge an Kühlfluid zu messen.

**3.** Verfahren nach Anspruch 1 oder Anspruch 2, **dadurch gekennzeichnet, dass** die Abweichung zwischen den tatsächlichen Parametern und den theoretischen Parametern durch die Summe eines proportionalen Terms und eines integralen Terms kompensiert wird.

**4.** Verfahren nach Anspruch 3, **dadurch gekennzeichnet, dass** die obere Grenze des integralen Terms gleich der Differenz zwischen der maximalen Öffnung des Verschlusselements und dem proportionalen Term bei der Solltemperatur des Kühlfluids ist.

**5.** Verfahren nach Anspruch 3, **dadurch gekennzeichnet, dass** die untere Grenze des integralen Terms gleich dem proportionalen Term mit negativem Vorzeichen bei der Solltemperatur des Kühlfluids ist.

**6.** Verfahren nach einem der Ansprüche 3 bis 5, **dadurch gekennzeichnet, dass** über eine als hoch bewertete Temperatur hinaus der proportionale Term gleich der maximalen Öffnung des Verschlusselements ist, dem der Absolutwert der unteren Grenze des integralen Terms hinzugefügt wird.

**7.** Verfahren nach einem der Ansprüche 3 bis 5, **dadurch gekennzeichnet, dass** unter einer als niedrig bewerteten Kühlfluidtemperatur der proportionale Term gleich dem maximalen Verschluss des Verschlusselements ist, von dem die obere Grenze des integralen Terms abgezogen wird.

**8.** Kraftfahrzeug, umfassend einen Verbrennungsmotor, der mit einer Kühlschaltung ausgestattet ist, die durch das Verfahren zur Wärmeregulierung nach einem der vorhergehenden Ansprüche gesteuert wird.

**Claims**

**1.** A control method of a cooling system equipped with a shutter (5) for controlling the flow of coolant, including the following steps:

- measurement of actual parameters of the temperature control, including in particular a static deviation and a response time,
- comparison of the actual parameters with theoretical parameters,

**characterized in that**

- if a difference between the actual parameters and the theoretical parameters is found, an operation then consists in modifying the position of the shutter (5) according to a polynomial function of the second degree where the volume flow rate is proportional to the square of the position of the shutter (5).

**2.** The method according to Claim 1, **characterized in that** a first step consists in measuring the response time as a function of the flow of the coolant.

**3.** The method according to Claim 1 or Claim 2, **characterized in** the difference between the actual parameters and the theoretical parameters is compensated by the sum of a proportional term and an integral term.

**4.** The method according to Claim 3, **characterized in that** the upper limit of the integral term is equal to the difference between the maximum opening of the shutter and the proportional term to the coolant temperature setpoint.

5. The method according to Claim 3, **characterized in that** the lower limit of the integral term is equal to the proportional term with a negative sign to the coolant temperature setpoint.

6. The method according to one of Claims 3 to 5, **characterized in that** beyond a temperature which is deemed high, the proportional term is equal to the maximum opening of the shutter to which is added the absolute value of the lower limit of the integral term.

7. The method according to one of Claims 3 to 5, **characterized in that** below a coolant temperature which is deemed low, the proportional term is equal to the maximum closure of the shutter to which the upper limit of the integral term is subtracted.

8. A motor vehicle including an internal combustion engine equipped with a cooling circuit governed by the temperature control method according to any one of the preceding claims.

FIG. 1

FIG. 2

FIG. 3

FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2859757, ROBERT BOSCH GMBH